# EUROPÄISCHE PATENTSCHRIFT

(11) **EP 1 076 427 B1**
(45) Veröffentlichungstag und Bekanntmachung des Hinweises auf die Patenterteilung: **29.03.2006**
(21) Anmeldenummer: 00115718.9
(22) Anmeldetag: 21.07.2000
(51) Int. Cl.: H04B 7/26

(54) **Verfahren zur Überwachung von Sendern in einem Gleichwellennetz und Funkstation zum Empfangen von Funksignalen in einem Gleichwellennetz**
Method for monitoring transmitters in a common wave network and radio station for receiving radio signals in a common wave network
Procédé de surveillance d'émetteurs dans un réseau à fréquence commune et station radio pour réception de signaux radio dans un tel réseau

(30) Priorität: 07.08.1999 DE 19937457
(43) Veröffentlichungstag der Anmeldung: 14.02.2001
(73) Patentinhaber: ROBERT BOSCH GMBH, 70442 Stuttgart (DE)
(72) Erfinder: Schrader, Marc, 30161 Hannover (DE); Titze, Wolfgang, D-10557 Berlin (DE); Friese, Michael, 31171 Nordstemusen (DE)

(56) Entgegenhaltungen:
- EP-A- 0 836 304
- DE-A- 19 642 633
- US-A- 5 790 784

## Beschreibung

### Stand der Technik

Die Erfindung geht aus von einem Verfahren zur Überwachung von Sendern in einem Gleichwellennetz bzw. einer Funkstation zum Empfangen von Funksignalen in einem Gleichwellennetz nach der Gattung der unabhängigen Patentansprüche.

Es ist bereits aus der Offenlegungsschrift DE 196 426 33 A1 bekannt, daß aus den Phasenreferenzsymbolen, die in einem DAB-Rahmen übertragen werden, die Impulsantwort übermittelt werden kann. Dabei wird die Zuordnung der Impulsantworten zu den einzelnen Sendern mittels Laufzeitunterschieden vorgenommen. Die Sendererkennung wird mittels des Transmitter-Indentification-Information-Symbols (TII) im DAB-Rahmen erkannt.

Aus US-5,790,784 A ist eine Funkstation bekannt, die ein empfangendes Signal der im abgespeicherten Signal vergleicht. Damit ist die Impulsantwort des Übertragungskanals bestimmbar.

### Vorteil der Erfindung

Das erfindungsgemäße Verfahren bzw. die erfindungsgemäße Funkstation mit den Merkmalen der unabhängigen Ansprüche hat demgegenüber den Vorteil, daß mit nur einer Funkstation mittels der Auswertung der Impulsantworten eine Überwachung mehrerer Sender möglich ist. Dabei ist die Position der Funkstation beliebig, solange sich die Funkstation innerhalb des Versorgungsgebietes des Gleichwellennetzes befindet.

Es ist vorteilhaft, daß mittels der Auswertung der Impulsantwort der einzelnen Sender durch die Funkstation eine Regelung der Sender möglich ist, bis eine bekannte Impulsantwort durch die Funkstation gemessen wird. Dadurch ist eine Optimierung des Senderbetriebes möglich.

Durch die in den abhängigen Ansprüchen aufgeführten Maßnahmen sind vorteilhafte Weiterbildungen und Verbesserungen des bzw. der im Hauptanspruch angegebenen Verfahrens bzw. Funkstation möglich.

Die Funkstation ermittelt vorteilhafterweise aus den empfangenen Funksignalen, die Synchronisierungssignale aufweisen, die Synchronisierung der einzelnen Sender untereinander. Dieses Ergebnis des Synchronisierungsvergleichs wird den Sendern übermittelt, so daß die Sender in der Lage sind, sich gegebenenfalls neu zu synchronisieren.

Weiterhin ist von Vorteil, daß die Funkstation im eingeschwungenen Zustand des Gleichwellennetzes eine Referenzimpulsantwort für die sendenden Sender ermittelt, um später ein Vergleich mit gemessenen Impulsantworten durchzuführen, so daß Störungen an Sendern oder veränderte Ausbreitungsbedingungen schnell erkannt und gegebenenfalls automatisch behoben werden können. Dadurch ist eine Optimierung des Gleichwellennetzes möglich.

Um die Auswertung der von der Funkstation gemessenen Daten zu verbessern, ist es von Vorteil, daß der Standort der Funkstation bestimmt wird. Dadurch ist es z.B. möglich, eine Region mit schlechten Ausbreitungsbedingungen zu identifizieren, um dann die jeweiligen Sender im Hinblick auf diese Ausbreitungsbedingungen hinzu optimieren, zum Beispiel die Sendeleistung erhöhen oder senken.

Es ist von Vorteil, daß die Funkstation mit den Sendern oder mit einer Zentrale verbunden ist, wobei die Zentrale dann mit den Sendern verbunden ist, so daß die Funkstation in einfacher Weise ihre Meßergebnisse den Sendern bzw. der Zentrale mitteilen kann, um eine Regelung des Gleichwellennetzes zu ermöglichen.

Wird eine Zentrale die Informationen von der Funkstation bekommen, dann ist eine globale Optimierung des Gleichwellennetzes möglich, während, wenn nur die Sender die Informationen von der Funkstation erhalten, eine lokale Regelung möglich ist.

In vorteilhafter Weise wird es dem Benutzer ermöglicht, an der Funkstation durch Bedieneinrichtungen, die Ermittlung einer Referenzimpulsantwort zu veranlassen und den Standort der Funkstation zu bestimmen.

Weiterhin ist es von Vorteil, daß die Funkstation nach Einschalten die Referenzimpulsantworten der Funkkanäle zu den Sendern und die Bestimmung des Standorts der Funkstation automatisch durchführt.

Darüber hinaus ist es von Vorteil, daß die Funkstation entweder mobil, portabel oder stationär ausgeführt ist. Dadurch ist gewährleistet, daß die Funkstation für alle möglichen Anwendungsfälle einsetzbar ist.

### Zeichnung

Ein Ausführungsbeispiel der Erfindung ist in der Zeichnung dargestellt und in der nachfolgenden Beschreibung näher erläutert. Es zeigen Figur 1 einen DAB-Rahmen, Figur 2 zeigt eine diskrete Impulsantwort eines DAB-Signals, Figur 3 a und b Impulsantworten verschiedener Sender bei verschiedenen Empfangssituationen, Figur 4 ein Gleichwellennetz mit verschiedenen Sendern und einer Zentrale und der Funkstation, Figur 5 ein Blockschaltbild des inneren Aufbaus der Funkstation, Figur ein Gleichwellennetz mit verschiedenen Sendern, einer Zentrale und der Funkstation, wobei ein leitungsgebundenes Kommunikationsnetz zum Informationsaustausch zwischen Funkstation und Zentrale beziehungsweise den Sendern genutzt wird.

### Beschreibung des Ausführungsbeispiels

Bei DAB (Digital Audio Broadcasting) handelt es ich um ein Multifrequenzträgerübertragungssystem mit hoher Bandbreite. Innerhalb dieses digitalen terrestrischen Hörfunksystems kommt das Modulationsverfahren orthogonaler Frequenzmultiplex (Orthogonal Frequency Division Multiplex = OFDM) zum Einsatz. OFDM ist ein Modulationsverfahren, bei dem das zu übertragende Signal auf mehrere Unterträger verteilt wird, wobei sich die auf diese Unterträger verteilten Signale gegenseitig nicht stören. Dieses Verhalten wird mit orthogonal beschrieben.

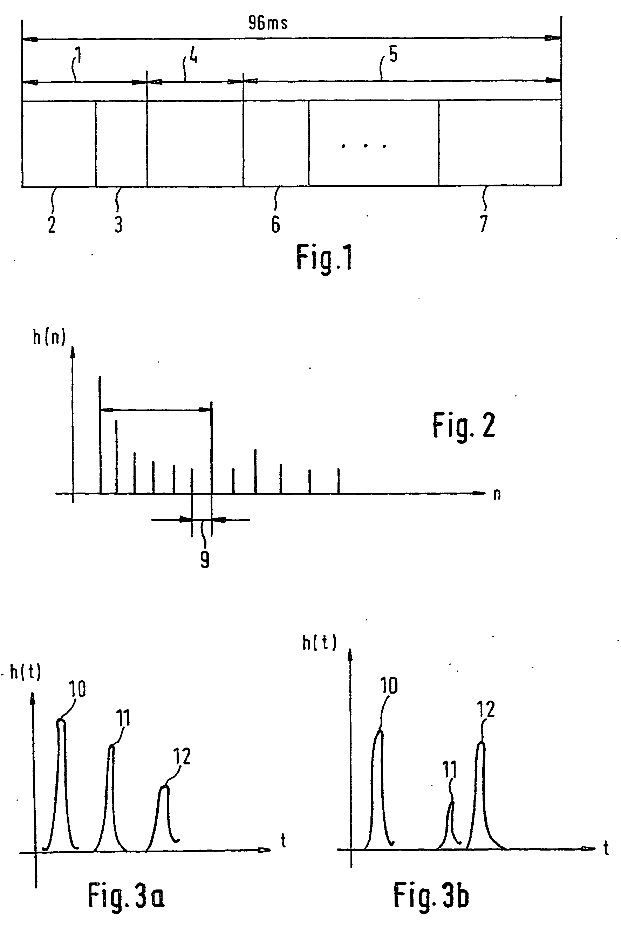

Das DAB-Signal besteht aus OFDM-Symbolen, die in einer Rahmenstruktur nach Figur 1 angeordnet sind. Das Ausführungsbeispiel ist für den DAB Mode I gültig. Der DAB-Rahmen hat demnach hier eine Breite von 96 ms. Innerhalb des DAB-Rahmens wird zuerst der Synchronisierungskanal 1 übertragen, in dem sich das Nullsymbol 2 und das Phasenreferenzsymbol (Time Frequency Phase Referenz = TFPR) Symbol 3, befinden. Dann werden im Fast Information Channel (FIC 4) Informationen darüber übertragen, wo im Frequenzmultiplex den Programmen und Datendiensten zugeordnete Daten zu finden sind und wie die jeweilige Kanalkodierung aussieht. Im Main Service Channel 5 werden die restlichen 72 OFDM-Symbole übertragen. Sie enthalten die eigentlichen Nutzdaten, wie Audiosignale oder Zusatzdaten.

In jedem zweiten abgestrahlten DAB-Rahmen wird anstelle des Nullsymbols ein TII-Symbol übertragen. Dieses TII-Symbol enthält eine individuelle Kennung des DAB-Senders. Anhand dieses TII-Symbols erkennt der Empfänger, welcher Sender diesen Rahmen gesendet hat.

Da das DAB-System in der Lage ist, Echos des ursprünglichen Signals zu verarbeiten, ist es möglich, das DAB-Sendernetz als Gleichwellennetz zu betreiben. Das bedeutet, daß alle Sender in einem Versorgungsbereich ein Programm auf derselben Frequenz abstrahlen

Durch Anwendung des Gleichwellennetzbetriebes entsteht so durch die geringen Abstände der Sender zueinander ein überlagertes DAB-Signal aus unterschiedlichen Sendersingnalen. Aus diesem überlagerten DAB-Signal, bzw. dem darin übertragenen TII-Symbolen, müssen die an der Überlagerung beteiligten Sender herausgefunden werden.

Mittels des TFPR-Symbols aus dem DAB-Rahmen wird die Impulsantwort ermittelt. Dies geschieht so, daß zunächst die frequenzabhängige Übertragungfunktion h(f) zu bestimmen ist. h(f) wird ermittelt, indem das Empfangssignal mit dem komplex konjugierten Sendesignal multipliziert wird. Als komplex konjugierten Sendesignal wird das originale TFPR-Symbol verwendet und konjugiert. Durch Rücktransformation in den Zeitbereich gewinnt man aus der Übertragungsfunktion h(f) die Impulsantwort h(t). Geht man von der zeitkontinuierlichen Darstellung der Impulsantwort zur Darstellung als zeitdiskrete Funktion über, ergibt sich für die Impulsantwort des DAB-Signals das Bild in Figur 2. Man erkennt deutlich zwei Sendesignale mit einem Laufzeitunterschied 8. Der Abstand 9 ist der Zeitraum zwischen zwei Abtastungen des DAB-Signals.

Mit der berechneten Impulsantwort ist man in der Lage, den vorhandenen Übertragungskanal vom Sender zum Empfänger zu charakterisieren. Die Impulsantwort enthält Informationen über die empfangenen Sendesignale. Ein empfangenes Sendesignal ist aufgrund der Mehrwegeausbreitung zeitverzögernd mehrfach am Empfänger empfangen worden. Durch bekannte Methoden der Laufzeitdifferenzmessung können solche überlagerten Signale auseinander gehalten werden.

Es ist allgemein der Auftrag einer Rundfunkanstalt, einen störungsfreien Empfang für die Sendezeit und für das Sendegebiet zu gewährleisten. Dafür muß ein Rundfunknetz überwacht werden. Bei DAB ist dies nun ein Gleichwellennetz. Wichtig ist, daß die Sender miteinander zeitlich synchronisiert sind, so daß aus dem überlagerten Signal am Empfänger die DAB-Signale noch ermittelt werden können. Daher muß die Zeitsynchronisation dieser Sender überwacht werden. Darüber hinaus ist es wichtig, daß die einzelnen Sender die Rundfunkprogramme mit einer optimalen Sendeleistung ausstrahlen, damit jeder Empfänger im Sendegebiet das Rundfunkprogramm mit ausreichendem Signalpegel empfangen kann. Die Ausbreitungsbedingungen können zum Beispiel durch unterschiedliche Wetterlagen stark beeinflußt werden. Ein weiterer Punkt ist der Betrieb der einzelnen Sender, das heißt, es muß überwacht werden, ob einzelne Sender ausgefallen sind oder ob zum Beispiel ein Sender mit Notbetrieb läuft.

Erfindungsgemäß wird eine Funkstation an einem beliebigen Ort im Sendegebiet plaziert, um die DAB-Signale, die von den einzelnen Sendern ausgestrahlt werden, zu empfangen. Der DAB-Empfänger dieser Funkstation synchronisiert auf das Nullsymbol 2. Durch die Laufzeitunterschiede zwischen den DAB-Signalen der einzelnen Sender ermittelt die Funkstation, wie gut die Sender synchronisiert sind. Zur Ermittlung der notwendigen Sendeleistung der einzelnen Sender und der Ausbreitungsbedingungen wird die Impulsantwort, die wie oben erwähnt, aus den DAB-Signalen gewonnen wird, verwendet.

Zunächst wird mit der erfindungsgemäßen Funkstation eine Referenzimpulsantwort berechnet, falls das DAB-Gleichwellennetz sich in einem eingeschwungenen Zustand befindet, das heißt, alle Sender sind im Normalbetrieb. Die Referenzimpulsantwort wird mit bekannten Methoden aus dem TFPR-Symbol ermittelt und im DAB-Empfänger abgespeichert. Dann wird periodisch die Impulsantwort aus den empfangenen DAB-Signalen ermittelt und mit der Referenzimpulsantwort verglichen. Die Periode, mit der das geschieht, ist zum Beispiel jeder 10. DAB-Rahmen, so daß dieser Vergleich ungefähr jede Sekunde vorgenommen wird.

In Figur 3a sind die Referenzimpulsantworten von den Sendern A 10, B 11 und C 12, dargestellt. In Figur 3b sind die drei Impulsantworten, die nun für einen DAB-Rahmen ermittelt wurden, dargestellt. Insbesondere die Impulsantwort 11 des Funkkanals zum Sender B hat sich in seiner Amplitude sowie der Position verändert, so daß eine Anpassung der Sendeleistung und der Synchronisation des Senders B erforderlich ist. Durch diese Vergleichsmessung wird also festgestellt, ob ein Sender seine Leistung erhöhen oder senken muß und/oder ob ein Sender die zeitliche Synchronisation durch Laufzeitverlängerung oder -verkürzung verändern muß, um auf die veränderten Betriebsbedingungen zu reagieren. Im Falle eines Senderausfalls wird, zum Beispiel wenn der Sender B 11 ausfallen würde, keine Impulsantwort für diesen Sender ermittelt, so daß dann diese Information bereitsteht, um auf diesen Ausfall zu reagieren.

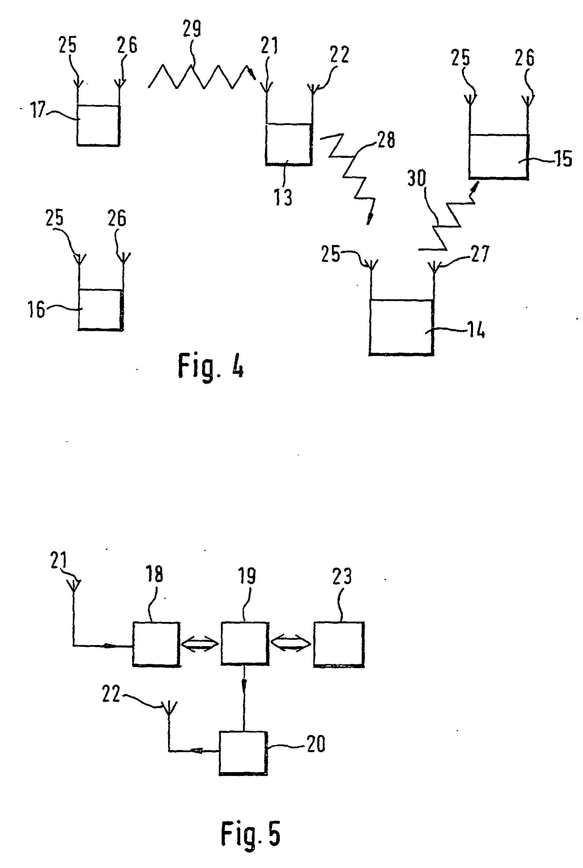

In Figur 4 ist gezeigt, wie schematisch die Funkstation 13 mit den Sendern A 15, B 16 und C 17, verbunden ist. Darüber hinaus ist eine Zentrale 14 mit den Sendern und der Funkstation verbunden. Die Verbindungen sind hier über Funkkanäle realisiert, zum Beispiel über das GSM-Netz. Es sind beispielhaft ein Funkkanal 29, über den DAB-Signale vom Sender C 17 zur Funkstation 13 gelangen. Die Funkstation 13 weist eine Antenne 21 zum Empfang von DAB-Signalen auf und eine Antenne 22 zum Abstrahlen der Informationen über die Zeitsynchronisation der Sender und über den Vergleich der Referenzimpulsantwort mit der gemessenen Impulsantwort. Daher weist die Funkstation 13 einen Sendeteil auf, um über einen Mobilfunkkanal 28 diese Informationen an die Zentrale 14 oder direkt über andere Mobilfunkkkanäle, zum Beispiel ein Mobilfunkkanal 30, an die Sender zu übermitteln. Die Zentrale 14 weist eine Antenne 25 zum Empfang von Mobilfunksignalen und eine Antenne 27 zum Abstrahlen von Mobilfunksignalen auf. Die Sender weisen eine Antenne 26 zum Empfang von Mobilfunksignalen und eine Antenne 25 zum Abstrahlen von DAB-Signalen auf.

Die Zentrale 14 sammelt die Informationen, die von der Funkstation 13 kommen, und sie veranlaßt über Funksignale die Sender 5 A, 15 B, 16 und C 17, auf die veränderte Situation zu reagieren, entweder daß sie sich neu synchronisieren oder daß die Sendeleistung angepaßt wird. Im Falle eines Senderausfalls kann z.B. entschieden werden, daß die verbleibenden Sender eine stärkere Sendeleistung aufbringen. Diese Zentrale 14 ist auch in der Lage aufgrund der Informationen der Funkstation 13 sowie den Sendern 15, 16 und 17 zu beurteilen, ob z.B. sich die Ausbreitungseigenschaften aufgrund von Wetterlagen geändert haben (Veränderung der Empfangsfeldstärke, Änderung der zeitlichen Synchronisation der Sender), oder ob ein Sender durch technische Probleme falsch synchronisiert ist oder nicht mehr die volle Sendeleistung erbringt. Dadurch kann die Zentrale 14 eine globale Optimierung für das komplette Gleichwellennetz übernehmen. Die Verbindungen zwischen der Funkstation 13 und der Zentrale 14 und den einzelnen Sendern können alternativ zu den Funkverbindungen auch als Leitungsverbindungen ausgeführt sein, indem z.B. ein vorhandenes Telefonnetz verwendet wird, um die Daten zu übertragen. Zusätzlich können die einzelnen Sender noch Meßstationen aufweisen und diese Meßstationen die Informationen an die Zentrale 14 weiterleiten, damit die Zentrale 14 schnell entscheiden kann, ob eine Senderfehlfunktion vorliegt, oder ob sich die Ausbreitungseigenschaften verändert haben.

Die Zentrale 14 selbst weist einen Rechner auf, um aus den Daten, die von der Funkstation 13 kommen, die Situation des Gleichwellennetzes zu berechnen. Darüber hinaus weist die Zentrale 14 Mittel zum Empfang und Versenden von Daten auf.

In Figur 5 ist mittels eines Blockschaltbilds der Aufbau der Funkstation 13 dargestellt. Über eine Antenne 21 werden die DAB-Signale empfangen und gelangen von der Antenne 21 zu einem DAB-Empfänger 18. Der DAB-Empfänger 18 liefert aus den empfangenen DAB-Signalen einen Datenstrom, den er an den Prozessor 19 übergibt. Der Prozessor 19 speichert zu Beginn seines Betriebs auf Ansprache durch einen Benutzer die Referenzimpulsantworten ab, um dann aus den vom DAB-Empfänger kommenden Datenströmen die Impulsantworten laufend zu berechnen und sie dann mit den Referenzimpulsantworten zu vergleichen. Das Ergebnis dieses Vergleichs und auch der Laufzeitunterschiede, die im Prozessor 19 aus den unterschiedlichen Datenströmen mittels des Nullsymbols 2 der einzelnen DAB-Rahmen ermittelt werden, werden als Datenstrom einem Sendeteil 20 übergeben. Der Prozessor 19 erhält auf Ansprache von einer Ortungsvorrichtung 23, die zum Beispiel ein GPS-Empfänger ist, den Ort der Funkstation. Auch diese Information wird dem Datenstrom hinzugefügt, der zum Sendeteil 20 gelangt. Das Sendeteil 20 wandelt den vom Prozessor 19 kommenden Datenstrom in zu sendende Funksignale um, die z.B. dem GSM-Standard entsprechen. Über die Antenne 22, die mit dem Sendeteil 20 verbunden ist, werden die Funksignale abgestrahlt, damit sie von der Zentrale 14 empfangen werden können.

Für die Zentrale 14 ist insbesondere der Ort der Funkstation 13 wichtig, um die Änderung in der Impulsantwort zu beurteilen. Um eine bessere Überwachung eines gleichwertigen Netzes zu gewährleisten, können mehrere Funkstationen 13 eingesetzt werden.

Die Funkstation 13 weist Bedienelemente auf, damit ein Benutzer eingeben kann, daß eine Referenzimpulsantwort nun ermittelt und dann abgespeichert werden soll. Das ist notwendig, denn ein Benutzer, wie zum Beispiel ein die Funkstation installierender Techniker, ist darüber informiert, daß sich das Gleichwellennetz in einem eingeschwungenem Zustand befindet, daß es also im regulären Betrieb ist. Darüber hinaus hat der Benutzer Bedienelemente zur Verfügung, damit er die Funkstation veranlaßt, den Standort mittels des GPS-Empfänger 23 zu bestimmen. Alternativ kann der Benutzer auch selbst die Koordinaten des Standorts der Funkstation 13 eingeben. Die Funkstation 13 kann dabei stationär, mobil oder portabel sein.

Im übrigen kann die Funkstation 13 so ausgeführt sein, daß nach Einschalten der Funkstation 13 eine Prozedur automatisch durchlaufen wird, die automatisch die Bestimmung der Referenzimpulsantworten der Funkkanäle zu den Sendern durchführt und die auch automatisch den Standort der Funkstation 13 mittels eines GPS-Empfängers ermittelt.

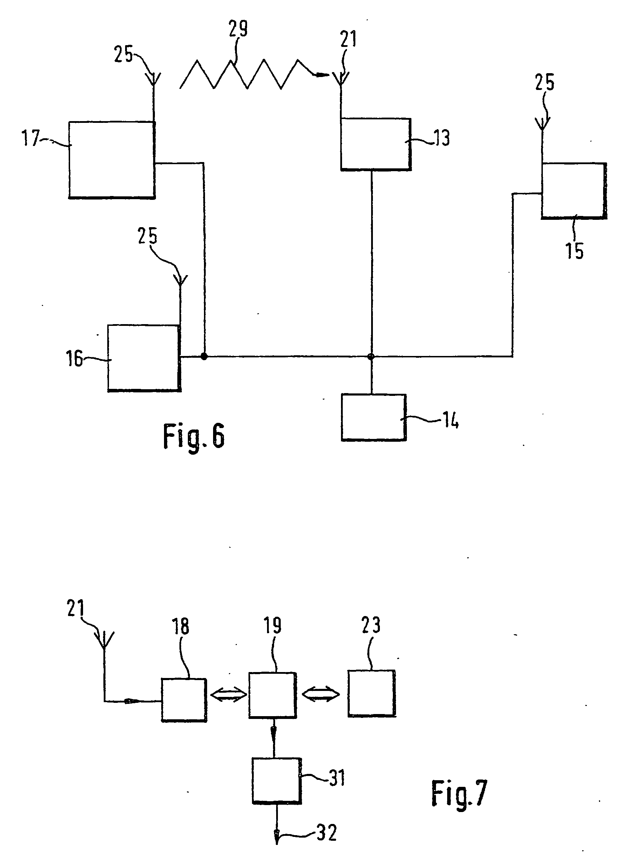

Die Funkstation 13 kann alternativ mit der Zentrale 14 und den Sendern A 15, B 16 und C 17 über ein Leitungsnetz verbunden sein. In Fig. 6 ist eine solche Konfiguration gezeigt. Die Funkstation 13, die Zentrale 14 und die Sender A 15, B 16 und C 17 sind über das Telefonnetz oder ein entsprechendes Kommunikationsnetz miteinander verbunden, während die Sender über ihre Antenne 25 DAB-Signale abstrahlen, welche die Funkstation 13 über zum Beispiel den Funkkanal 29 mittels ihrer Antenne 21 empfängt.

Der Aufbau der Funkstation 13 ändert sich aufgrund der Nutzung eines leitungsgebundenen Kommunikationsnetzes. Dies ist in Figur 7 gezeigt. Mittels einer Antenne 21 werden DAB-Signale empfangen. Die DAB-Signale gelangen von der Antenne 21 zum DAB-Empfänger 18, wo aus den DAB-Signalen ein Datenstrom erzeugt wird. Der DAB-Empfänger ist mit einem Prozessor 19 über einen Dateneingang und Datenausgang verbunden. Der Prozessor 19 bestimmt aus dem Datenstrom die Impulsantwort und Zeitsynchronisation der einzelnen Sender. Mittels einer Ortungsvorrichtung 23, mit der der Prozessor 19 über einen Dateneingang und Datenausgang verbunden ist, wird der Standort der Funkstation 13 bestimmt. Diese Bestimmung geschieht auf Ansprache durch den Prozessor 19. Der Prozessor 19 übergibt die Informationen über den Vergleich der Referenzimpulsantwort und der gemessenen Impulsantwort und der Zeitsynchronisation der Sender einem Modem 31, über das diese Informationen über einen Ausgang 32 über das Kommunikationsnetz zur Zentrale 14 und/oder den Sendern A, B und C gelangen.

## Patentansprüche

1. Verfahren zur Überwachung von Sendern in einem Gleichwellennetz, wobei Funksignale Synchronisierungssignale aufweisen, wobei aus von den Sendern gesendeten Funksignale die Impulsantworten für die Funkkanäle zu jedem Sender mittels einer empfangenden Funkstation (13) ermittelt werden, wobei durch einen Vergleich einer Referenzimpulsantwort und der gemessenen Impulsantwort jeder sendende Sender überwacht wird **dadurch gekennzeichnet, daß** das Ergebnis des Vergleichs der Referenzimpulsantwort und der gemessenen Impulsantwort den Sendern mitgeteilt wird, so daß die Funksender ihre Betriebsbedingungen, insbesondere die Sendeleistung, gemäß diesem Ergebnis verändern.

2. Verfahren nach Anspruch 1, **dadurch gekennzeichnet, daß** durch den zeitlichen Vergleich der Synchronisierungssignale unterschiedlicher Sender die Synchronisierung dieser Sender ermittelt wird und daß eine fehlerhafte zeitliche Synchronisierung den Sendern mitgeteilt wird, so daß die Sender sich neu synchronisieren.

3. Verfahren nach Anspruch 2, **dadurch gekennzeichnet, daß** im eingeschwungenen Zustand des Gleichwellennetzes die Referenzimpulsantworten ermittelt werden.

4. Verfahren nach Anspruch 3, **dadurch gekennzeichnet, daß** der Standort der Funkstation (13) mit dem Vergleich der Referenzimpulsantwort und der gemessenen Impulsantwort und mit dem Vergleich der Synchronisierungssignale den Sendern beziehungsweise einer Zentrale (14) übermittelt wird.

5. Funkstation zum Empfangen von Funksignalen in einem Gleichwellennetz, wobei die Funkstation (13) aus den empfangenen Funksignalen eine Impulsantwort mittels eines Prozessors (19) ermittelt, wobei die Funkstation (13) aus den empfangenen Funksignalen Synchronisierungssignale mittels des Prozessors (19) ermittelt, wobei die Funkstation (13) die ermittelten Impulsantworten mit Referenzimpulsantworten mittels des Prozessors (19) vergleicht **dadurch gekennzeichnet, daß** die Funkstation (13) einen Sendeteil (20) und eine Antenne (22) aufweist, so daß die Funkstation (13) in der Lage ist, den Sendern und/oder einer Zentrale (14) Informationen mittels Funksignalen zu übermitteln.

6. Funkstation nach Anspruch 5, **dadurch gekennzeichnet, daß** die Funkstation (13) ein Modem (31) aufweist, um Informationen über ein leitungsgebundenes Kommunikationsnetz, insbesondere ein Telefonnetz, an die Zentrale (14) und/oder die Sender zu versenden.

7. Funkstation nach Anspruch 6, **dadurch gekennzeichnet, daß** die Funkstation mit einer Zentrale (14) verbunden ist, so daß die Zentrale (14) die Sender mittels der von der Funkstation (13) empfangenen Informationen regelt.

8. Funkstation nach Anspruch 6 oder 7, **dadurch gekennzeichnet, daß** die Funkstation (13) der Zentrale (14) und/oder den Sendern den Vergleich der Referenzimpulsantworten der gemessenen Impulsantwort, den Vergleich der Synchronisierungssignale und den Ort der Funkstation (13) übermittelt.

9. Funkstation nach Anspruch 8, **dadurch gekennzeichnet, daß** die Funkstation Bedieneinrichtungen aufweist, mit der ein Benutzer die-Ermittlung von Referenzimpulsantworten und von dem Standort der Funkstation (13) veranlaßt.

10. Funkstation nach Anspruch 8, **dadurch gekennzeichnet, daß** die Funkstation (13) nach Einschalten automatisch die Ermittlung von Referenzimpulsantworten und die Standortbestimmung der Funkstation (13) veranlaßt.

## Claims

1. Method for monitoring transmitters in a simultaneous broadcasting network, where radio signals have synchronization signals, where radio signals transmitted by the transmitters are used to ascertain the impulse responses for the radio channels for each transmitter using a receiving radio station (13), and where a comparison between a reference impulse response and the measured impulse response is used to monitor each transmitting transmitter, **characterized in that** the result of the comparison between the reference impulse response and the measured impulse response is communicated to the transmitters, so that the radio transmitters alter their operating conditions, particularly the transmitted power, on the basis of this result.

2. Method according to Claim 1, **characterized in that** the comparison of the synchronization signals from different transmitters over time is used to ascertain the synchronization of these transmitters, and **in that** incorrect time synchronization is communicated to the transmitters, so that the transmitters resynchronize themselves.

3. Method according to Claim 2, **characterized in that** the reference impulse responses are ascertained in the steady state of the simultaneous broadcasting network.

4. Method according to Claim 3, **characterized in that** the location of the radio station (13) is transmitted to the transmitters or to a control centre (14) with the comparison between the reference impulse response and the measured impulse response and with the comparison between the synchronization signals.

5. Radio station for receiving radio signals in a simultaneous broadcasting network, where the radio station (13) uses the received radio signals to ascertain an impulse response using a processor (19), where the radio station (13) uses the received radio signals to ascertain synchronization signals using the processor (19), and where the radio station (13) compares the ascertained impulse responses with reference impulse responses using the processor (19), **characterized in that** the radio station (13) has a transmission part (20) and an antenna (22), so that the radio station (13) is able to transmit information to the transmitters and/or to a control centre (14) using radio signals.

6. Radio station according to Claim 5, **characterized in that** the radio station (13) has a modem (31) for sending information to the control centre (14) and/or to the transmitters via a line-connected communication network, particularly a telephone network.

7. Radio station according to Claim 6, **characterized in that** the radio station is connected to a control centre (14), so that the control centre (14) regulates the transmitters using the information received from the radio station (13).

8. Radio station according to Claim 6 or 7, **characterized in that** the radio station (13) transmits the comparison between the reference impulse responses and the measured impulse response, the comparison between the synchronization signals, and the location of the radio station (13) to the control centre (14) and/or to the transmitters.

9. Radio station according to Claim 8, **characterized in that** the radio station has control devices which a user uses to prompt ascertainment of reference impulse responses and of the location of the radio station (13).

10. Radio station according to Claim 8, **characterized in that** the radio station (13) automatically prompts the ascertainment of reference impulse responses and position-finding for the radio station (13) after it has been turned on.

## Revendications

1. Procédé de surveillance d'émetteurs dans un réseau à fréquence commune, des signaux radio présentant des signaux de synchronisation, les réponses d'impulsion pour les canaux radio étant déterminées vers chaque émetteur à partir des signaux radio envoyés par des émetteurs à l'aide d'une station radio réceptrice (13), une comparaison entre une réponse d'impulsion de référence et la réponse d'impulsion mesurée permettant de surveiller chaque émetteur émettant,
**caractérisé en ce que**
le résultat de la comparaison entre la réponse d'impulsion de référence et la réponse d'impulsion mesurée est transmise aux émetteurs de sorte que les émetteurs radio modifient leurs conditions de fonctionnement, notamment la puissance d'émission, selon ce résultat.

2. Procédé selon la revendication 1,
**caractérisé en ce que**
la synchronisation des différents émetteurs est déterminée grâce à la comparaison temporelle de leurs signaux de synchronisation et une synchronisation temporelle erronée est communiquée aux émetteurs pour se resynchroniser.

3. Procédé selon la revendication 2,
**caractérisé en ce que**
les réponses d'impulsion de référence sont déterminées dans le régime permanent du réseau à fréquence commune.

4. Procédé selon la revendication 3,
**caractérisé en ce que**
l'emplacement de la station radio (13) est communiqué aux émetteurs et/ou à une centrale (14) avec la comparaison de la réponse d'impulsion de référence et de la réponse d'impulsion mesurée et celle des signaux de synchronisation.

5. Station radio pour la réception de signaux radio dans un réseau à fréquence commune, la station radio (13) déterminant à partir des signaux radio reçus une réponse d'impulsion à l'aide d'un processeur (19), la station radio (13) déterminant à l'aide du processeur (19) les signaux de synchronisation à partir des signaux radio reçus, la station radio (13) comparant à l'aide du processeur (19) les réponses d'impulsion déterminées et les réponses d'impulsion de référence,
**caractérisée en ce que**
la station radio (13) présente une partie émettrice (20) et une antenne (22) afin de pouvoir transmettre des informations à l'aide des signaux radio aux émetteurs et/ou à une centrale (14).

6. Station radio selon la revendication 5,
**caractérisée en ce que**
la station radio (13) présente un modem (31) afin d'envoyer à la centrale (14) et/ou aux émetteurs des informations par l'intermédiaire d'un réseau de communication fixe, notamment un réseau téléphonique.

7. Station radio selon la revendication 6,
**caractérisée en ce que**
la station radio est reliée à une centrale (14) afin que cette dernière régule les émetteurs à l'aide des informations reçues par la station radio (13).

8. Station radio selon la revendication 6 ou 7,
**caractérisée en ce que**
la station radio (13) communique à la centrale (14) et/ou aux émetteurs la comparaison entre les réponses d'impulsion de référence et la réponse d'impulsion mesurée, la comparaison entre les signaux de synchronisation et l'emplacement de la station radio (13).

9. Station radio selon la revendication 8,
**caractérisée en ce que**
la station radio présente des dispositifs de commande, permettant à un utilisateur d'autoriser la détermination des réponses d'impulsion de référence et de l'emplacement de la station radio (13).

10. Station radio selon la revendication 8,
**caractérisée en ce que**
la station radio (13) autorise automatiquement après son activation la détermination des réponses d'impulsion de référence et celle de l'emplacement de la station radio (13).
